# EUROPEAN PATENT SPECIFICATION

(11) **EP 2 634 845 B1**
(45) Date of publication and mention of the grant of the patent: **16.09.2020**
(21) Application number: 12157429.7
(22) Date of filing: 29.02.2012
(51) Int. Cl.: H01M 4/485, H01M 4/505, H01M 4/58, H01M 4/62, H01M 10/052, C01G 31/00, C01G 45/00, C01G 49/00

(54) **Coating and lithiation of inorganic oxidants by reaction with lithiated reductants**
Beschichtung und Lithiierung von anorganischen Oxidantien durch Reaktion mit lithiierten Reduktionsmitteln
Revêtement et lithiation d'oxydants inorganiques par réaction des réducteurs lithiés

(43) Date of publication of application: 04.09.2013
(73) Proprietor: Belenos Clean Power Holding AG, 2502 Bienne (CH)
(72) Inventor: Waechter, Florian, 8037 Zürich (CH); Nesper, Reinhard, 8873 Amden (CH)
(74) Representative: Giraud, Eric

(56) References cited:
- EP-A1- 2 098 483
- US-A1- 2003 073 001
- US-A1- 2010 261 063
- US-A1- 2011 104 553
- US-B2- 6 962 666
- PATEY T J ET AL: "Flame co-synthesis of LiMn2O4 and carbon nanocomposites for high power batteries", JOURNAL OF POWER SOURCES, ELSEVIER SA, CH, vol. 189, no. 1, 1 April 2009 (2009-04-01) , pages 149-154, XP025982679, ISSN: 0378-7753, DOI: 10.1016/J.JPOWSOUR.2008.10.002 [retrieved on 2008-10-11]
- R. NESPER ET AL: "Synthesis and Characterization of Carbon-Based Nanoparticles and Highly Magnetic Nanoparticles with Carbon Coatings", ADVANCED FUNCTIONAL MATERIALS, vol. 16, no. 2, 19 January 2006 (2006-01-19), pages 296-305, XP55035825, ISSN: 1616-301X, DOI: 10.1002/adfm.200500310
- LIJUAN WANG ET AL: "Pressure-Induced Polymerization and Disproportionation of Li 2 C 2 Accompanied with Irreversible Conductivity Enhancement", JOURNAL OF PHYSICAL CHEMISTRY LETTERS, vol. 8, no. 17, 7 September 2017 (2017-09-07), pages 4241-4245, XP055431806, US ISSN: 1948-7185, DOI: 10.1021/acs.jpclett.7b01779

## Description

### Technical Field

The present invention concerns conductive microparticles suitable for being used in electrodes of lithium ion batteries as well as methods for the production of such miroparticles and electrodes.

### Background Art

The electroactive materials of electrodes of lithium ion batteries comprise at least one transition metal providing exchangeable valence electrons, said material also allowing insertion and removal or intercalation and deintercalation, respectively, of alkaline metal ions in order to keep neutrality of the material in case of exchange of valence electrons.

Some very interesting electroactive materials are not or not suficiently conductive per se. Such materials are used in the form of microparticles (also termed microparticulate form) or nanoparticles (also termed nanoparticulate form) and in combination with a conductive matrix. Additional improvement is obtained if the particles are conductively coated.

It is assumed that conductive coatings add to the structural integrity of the particels because of improved regularity of electric field distribution on the surface of the particles and therewith connected improved structural integrity. In addition, even if the electroactive material particles are partially disintegrated over an extended number of cycles, the carbon coating proved advantageous. This may be due to encapsulation of the disintegrated particles and - if breaking apart - in partially conductively coated fragments. Methods for providing microparticles with a conductive coating are known. The preferred coating is a coating with carbonaceous material.

Carbon and carbonaceous materials are known as good electrical conductors and are already used to increase the electronic conductivity of electroactive materials. In general, carbon coating of oxide materials is carried out using a pyrolysis process that forms a thin layer of carbonaceous material such as pyrolitic graphite on the surface of particles provided that the electroactive core material is sufficiently stable in reducing atmosphere (see US 6,962,666). According to US 6,962,666, the carbonaceous coating may be obtained through thermal decomposition or through dehydrogenation, e.g. by partial oxidation of organic materials such as hydrocarbons and their derivatives like polycyclic aromatic moieties, sugars, carbon hydride and polymers. In some embodiments a lithium salt of carboxylic acids is used for simultaneous lithiation and pyrolytic carbonatious coating formation. Also already known are carbon coated particles prepared by a combination of flame spray an diffusion flame (see T.J. Patey et al., Flame co-synthesis of LiMn2O4 and carbon nanocomposites for high power batteries, J. Power Sources 189 (2009), 149-154).

EP 2 098 483 teaches a one-step process for the preparation of crystalline lithium metal phosphate/carbon nanocomposites by mixing a metal source, an organophosphate, preferably phytic acid, as combined source of phosphate and carbon and a lithium source in aqueous solution to produce a mixture and then heating the mixture in an inert atmosphere at a temperature and for a time sufficient for form the desired lithium metal phosphate / carbon nanocomposite.

Also already known are carbon-coated crystalline metal oxide or metal phosphate particles prepared by reacting one or more solid, solvent-free chemical precursor materials comprising the elements making up the material in an enclosed autogenic pressure reactor in which the precursor materials are dissociated and reacted at elevated temperature, thereby creating self-generated pressure within the reactor (US2011/0104553). In addition, this reaction does not allow (partial) lithiation during the coating step.

However, the problem with the coatings of the state of the art is that the pyrolysis reaction is not well defined and that the chemical reactions are much limited with regard to the starting materials (common phosphate and carbon source or starting material decomposing into EAM and coating). During pyrolysis, the hydrocarbon or carboxylic acid deposits may release compounds in different stats of oxidation/reduction like hydrogen or water and carbon oxides or dioxides resulting in an inhomogeneous coating of not clearly defined composition and possibly in affected EAMs. The synthesis using a common phosphate and carbon source also involves a separate lithium source thereby involving several possible redox systems making the reaction poorly predictable and the method using decomposition has the drawback that no partial lithiation takes place prior to carbon coating.

Thus, there is still a need for high energy storage materials with a good conductive coating and a method for obtaining such materials preferably in a one step reaction.

### Disclosure of the Invention

Hence, it is a general object of the invention to provide optimized coating methods and therewith obtainable optimized carbon coated electroactive particles with a coating having improved homogeneity and purity.

Now, in order to implement these and still further objects of the invention, which will become more readily apparent as the description proceeds, the method for producing conductively coated particles comprising an at least partially metallated electroactive core material is manifested by comprising the steps of premixing an oxidant electroactive material with a metallated reductant followed by chemically reacting the oxidant electroactive material with the metallated reductant, said reductant being a coating precursor, said metal being at least one alkaline and/or at least one alkaline earth metal, and said chemically reacting being performed under conditions allowing reduction and metallation of the electroactive material via insertion/intercalation of the alkalinemetal cation(s) and/or the alkaline earth metal cation(s) and coating of the metallated electroactive material with a coating formed from the metallated elctroactive material with a coating formed from the metallated reductant via a redox reaction. The conditions under which the redox reaction takes place comprise applying energy in form of heat, tribological energy, ultrasound or microwave.

The terms insertion and intercalation or deinsertion and deintercalation, respectively are used interchangeably for both crystalline and amorphous materials.

A metal comprising compound is termed metallated.

Insertion or intercalation, respectively, of different alkaline and/or alkaline earth metals at the same time like Li and Na and/or K can lead to a more stable system. Thus the use of mixed metallated reductants like Li₂₋ₓNaₓC₂ (x≤1) and/or Li₂₋ₓKₓC₂ (x≤1) is also of interest.

In one embodiment, the metallated reductant comprises or consists of alkaline metal(s), wherein the alkaline metal(s) comprises at least 50 % lithium, preferably at least 95 % lithium, more preferred at least 99 % lithium.

For sake of readability, in the following description lithium is mentioned although besides of lithium sodium and potassium may also be present, or alkaline earth metals alone or in combination with alkaline metals.

The method of the present invention is a one step method that allows simultaneous lithiation and coating of inorganic oxidants. The coating is not limited to carbon although carbon is preferred but may e.g. also be a boron nitride or a carbon nitride coating. Other possible coatings comprise CBₓ from B=C=B⁴⁻ compounds like Li₄CB₂, CBₓN_{y} from a lithium pyrazine precursor like Ca₁₀₋ₓLi₂ₓ(BN₂)₄(CBN)₂ (see also WO 2004/069768), (S_{y}N)ₓ from e.g. LigNS₃, (CH)ₓ (polyacetylene) for example form LiHC₂.

The conditions allowing reduction and lithiation comprise applying energy in the form of
- heat
- tribological energy like (ball) milling
- ultrasound
- microwave.

In preferred embodiments, the chemical reaction can be induced either via thermal treatment of via tribological treatment, e.g. by ball milling. Both methods lead to conductively coated particles comprising an at least partially lithiated electroactive core material, but to different core materials. While heat treatment produces a crystalline at least partially lithiated electroactive core material, ball milling results in an almost amorphous at least partially lithiated electroactive core material. This difference in the at least partially lithiated electroactive core material, i.e. whether it is crystalline or amorphous, has a strong influence on the electrochemical behavior.

The reaction is a redox reaction of the form

Mₓreductant + oxidant → Mₓoxidant_{reduced} + reductant_{surface}(reductant_{oxidized})

In the following description, the electroactive material or electroactive core material or oxidant is abbreviated as EAM and the at least partially lithiated electroactive core material as LiEAM.

Different to pyrolysis, the carbon coating takes place via a stoichiometric reaction according to the equation 1:

x Li₂C₂ + Oxidant → Li₂ₓOxidant_{reduced} + 2x C_{surface}

Boron nitride coating and lithiation of formally inorganic oxidants may be obtained by reaction with Li₃BN₂ according to the following equation 2:

x Li₃BN₂ + Oxidant → Li₃ₓOxidant_{reduced} + x BN_{surface} + x/2 N₂

Carbon nitride coating and lithiation of formally inorganic oxidants may be obtained by reaction with Li₂CN₂ according to the following equation 3:

x Li₂CN₂ +Oxid ant → Li₂ₓOxidant_{reduced} + x CN_{2x-y} surface y/2 N₂

Possible Oxidants are:

| | |
|---|---|
| Transition metal oxides | MoO₃, MnO₂, LiMn₂O₄, V₂O₅ |
| Hydrated transition metal oxides | H₂V₃O₈ |
| Transition metal oxynitrides | NbNO |
| Transition metal phosphates | Mₓ(PO₄)_{y} (M = Fe, Co, Mn, Ni) |
| | |
| Transition metal oxides glasses | Glasses containing V2O5 and MoO3 |
| | |
| Elements | S; Se; Si |

The EAMs preferably are in the form of microparticles or even nanoparticles. Usually they have average diameters below 10 µm, preferably below 5 µm, more preferred below 1 µm and especially below 500 nm, in particular they are nanoparticles having an average particle size in the range of 5 to 500 nm, preferably in the range of 5 to 400 nm, more preferred in the range of 20 to 300 nm.

Also the lithium providing reductants are preferably of small size. For example lithium carbide (Li₂C₂) after synthesis has a particle size of 10 to 100µm. Since an as small as possible particle size is assumed to improve homogeneity of the coating, it is reduced in size, e.g. by ball milling for 1 hour with 500rpm, to end up with a homogeneous particle size of 1-5 µm. Particle sizes of <10 µm, preferably 100 nm to 5 µm, more preferred 0.5 to 1.5 µm are generally preferred for all Li and coating providing reductants.

Although (as shown above) other than carbon coatings can be applied via the inventive methods, carbon is presently preferred due to its conductivity that is better than the one of CN and BN and because of the good availability of suitable metallated precursors.

The invention is now further described for a carbon coating. However, the respective information is also applicable to other coatings.

Due to the stoichiometry of the reactions, the thickness of the coating can only be varied by variation of the particle size of the EAM or - for thinner coatings - by starting from an EAM that has already been partially lithiated. For a carbon coating starting from Li₂C₂, the amount of surface carbon corresponds to the amount of lithium taken up by the EAM. Since big particles have a higher ratio between volume and surface, as a rule the coating will be much thicker for big particles. The minimal thickness of 2 nm so far was observed for a 40 nm particle of LiFePO₄ and a maximum thickness of 30 nm for a 5 µm large particle of LiV₂O₅. It was found that even the thick coating of 30 nm allows intercalation/deintercalation, although at somewhat lower speed than a thin coating. The minimal thickness of a coating is assumed to be below 1 nm but presumably above 0.5 nm because the product deposited is not graphene. In addition, it is also assumed that the coating is protecting the EAM and therewith enhancing the cycle stability. Thus, the average thickness of the coating is preferably between 0.5 to 30 nm, more preferred between 0.5 to 2 nm.

Theoretically, the ideal thickness of the carbon coating is just thick enough to
- prevent EAMs/LiEAMs from dissolving
- prevent additional solid electrolyte interphases (SEI) growth of interphases that are formed on e.g. the cathode due to catalytic redox reactions of the electrolyte
- install reasonable surface conductivity for Li-ions and electrons
- possibly even glue the particles together.

In any case, it was found that in most cases partial or complete intercalation of cathode materials during this process improves their electrochemical properties.

In view of the homogeneous coverage of the particles with the carbon, some migration of the carbon on the surface of the particles is assumed.

Irrespective of whether the reaction is performed by ball milling or heat treatment, the reactants preferably are carefully premixed, in order to ensure that the reaction is started with homogeneously mixed starting materials.

The whole reaction, also the premixing can and preferably is performed in the absence of any solvent thereby avoiding any solvent removal step.

In e.g. the ball milling procedure the reaction starts directly. Suitable reaction conditions for this tribochemical step are e.g. a rotation speed of 200-1500rpm during 15 to 45 minutes, such as around 30 minutes or 30 minutes. Hitherto optimal products were obtained with 400 rpm during 30 minutes. Also important is the ratio between the weight of the balls and the weight of the sample which with the presently used equipment was found to be in the range from 6 : 1 to 4 : 1, preferably around 5 : 1 like 5.2 : 1 to 4.8 : 1.

With the exception of the weight ratio the material of the balls is irrelevant, provided that it is sufficiently hard. Examples of suitable materials are: Agate, a modification of silica, steal, Cr₂O₃, and Al₂O₃

Since the reaction is only slightly exothermic, no raise of the overall temperature is observed during ball milling such that the tribochemical reaction is devoid of a thermal treatment.

The ball milling method therefore is also applicable for heat sensitive materials as H₂V₃O₈ without risking decomposition.

The disadvantage of the ballmilling method is that the conditions are more difficult to adjust and that therefore it is more difficult to avoid side reactions (see below).

The ball milling method results in an amorphous material.

Heat treatment can be performed with fast heating rate of for example between 150 to 200 K/h like 180 K/h. In preferred embodiments, heat treatment is performed either with a slow heating rate or with high heating rate for an initial phase followed by a slow heating rate. A slow heating rate of e.g. between 50 to 70 K/h should be applied for about at least the last hour, i.e. starting at 50 to 70 K below the reaction temperature. A presently preferred heating rate is around 60 K/h starting at about 60 K before reaching the reaction temperature. The fast heating rate for example may be between 150 to 200 K/h such as 180 K/h.

The reaction temperature depends on the EAM and can easily be determined by thermogravimetry at a heating rate of e.g. 10K/min.

The advantage of the heat treatment are the very precisely adjustable conditions so that side reactions can be avoided.

The heat treatment leads to crystalline coated LiEAMs.

Since Li₂C₂ is a strong reductant care has to be taken that an intercalation takes place and not a reduction. As already indicated above, undesired side reactions have to be avoided by careful control of the reaction conditions. Such an undesired side reaction is e.g. shown in equation 4:

2 MnO₂ + Li₂C₂ → 2 MnO + Li₂O₂ + C

From the coated particulate materials described herein electrodes can be prepared by mixing the coated LiEAM with an optionally electronically conducting binder, optionally in particulate form and optionally in the presence of conductive additives like conductive carbon. The binding of the particulate coated LiEAM can be performed in a solvent followed by drying.

Suitable binders are polyvinylidene fluoride (PVDF), poly(3,4-ethylenedioxythiophene) (PEDOT),1-cyclohexyl-3-(2-morpholinoethyl)carbodiimide metho-p-toluenesulfonate or 1-cyclohexyl-3-(2-morpholinoethyl)carbodiimide methyl-p-toluenesulfonate (CMC), polytetrafluoroethylene (PTFE), fluoro polymer rubber (FKS), styrenebutadiene rubber (SBR), polyacrylnitrile(PAN), polyurethane, polyacrylic acid, polyamide, polyacrylate, and polyvinylether.

Suitable conductive carbons are SuperP® or Super P Li® Carbon (obtainable from TIMCAL) or nanofibers or nanotubes.

Suitable solvents are a mixture of aprotic polar and aprotic apolar solvents like THF/Toluene 4 : 1.

Dependent on the thermostability drying is preferably either performed at temperatures well above 100°C like 180°C under air, or at temperatures below 100°C like 80°C under vacuum.

Such electrodes can be used together with any suitable anode, and an electrolyte like LiPF₆ or Li(C₂F₅)₃PF₃ (e.g. 1M in ethylene carbonate : dimethyl carbonate 1 : 1 (w/w))

The advantages of the new methods and the therewith produced coated LiEAM are the enhanced purity due to the specific reactants. In addition, most of the carbon coating methods are performed via pyrolysis under reducing conditions in order to avoid combustion instead of pyrolysis. Therefore, it is impossible to coat numerous cathode materials which are in a high oxidation state with these methods. A separate reduction/coating will reduce the oxidation state and therefore make the EAM unuseable for cathodes.

In contrast to the one step method disclosed in US 6, 962,666 one advantage of the present method is also that due to the inventive reactions no pyrolysis takes place. Another advantage is the enhanced purity and reproducibility due to the use of metallated reductants.

In one embodiment these reductants may be free from oxygen and optionally free from oxygen and hydrogen which may result in better defined coatings and insertion/intercalation products.

The method of the invention is a surface contact reaction. Thus, due to the specific starting materials and reaction conditions according to the invention only the EAM is coated. Possible non-EAM side-products, e.g. impurities from EAM production, can be found during the coating reaction (e.g. optically due to having a colour different from black) and separated from the product if desired. Furthermore the atom economy of the reaction is 100 % or at least close to 100 %, i.e. no metal or surface coating atom is wasted during the reaction. Compared to a pyrolysis method the method of the invention is a very environment friendly reaction due to the lower energy consumption and the about 100% atom economy. Especially if oxygen free reductants are used, no waste management of the exhaust (CO, NOₓ) is needed.

Another advantage of the method of the invention is that no solvent is needed in the inventive coating reaction although in some cases use of a solvent might be useful.

The methods of the present invention lead to a predictable conversion of the coating precursor to the desired coating and predictable Li ions insertion since the reactions are stoichiometric. The invention also provides reactions that can be performed at low temperature and therefore are also suitable for coating temperature sensitive EAMs.

Contrary thereto the pyrolysis reaction of carboxylic acid salts will, dependent on the conditions and a specific EAM, in general lead to different compounds and to less defined coatings.

A further advantage of the inventive methods is that they can be used to produce a variety of conductive non carbonaceous coatings.

### Brief Description of the Drawings

The invention will be better understood and objects other than those set forth above will become apparent when consideration is given to the following detailed description thereof. Such description makes reference to the annexed drawings, that show:
Figure 1: X-Ray Powder Diffraction of the synthesized Li_{0.3}V₂O₅ compared to the theoretical pattern.
Figure 2: TEM-picture of Li_{0.3}V₂O₅ with carbon coating. The inter plane distance corresponds to the a-lattice parameter of Li_{0.3}V₂O₅.
Figure 3: EDX-analysis of Li_{0.3}V₂O₅ with carbon coating (EDX = Energy Dispersive X-ray Analysis).
Figure 4: Potential vs. specific charge for the Li_{0.3}V₂O₅ electrode.
Figure 5: X-Ray Powder Diffraction of the synthesized LiV₂O₅ compared to the theoretical pattern.
Figure 6: Thermogravimetry of the reaction of Li₂C₂ with V₂O₅.
Figure 7: Potential vs. specific charge for the LiV₂O₅ electrode.
Figure 8: X-Ray Powder Diffraction of LiFePO₄ synthesized via heat treatment (450°C) compared to the theoretical pattern.
Figure 9: Potential vs. specific charge for the via heat treatment synthesized LiFePO₄ electrode.
Figure 10: TEM-bright field picture of LiFePO₄ with carbon coating.
Figure 11: Indexed Fourier Transformation of Figure 9.
Figure 12: X-Ray Powder Diffraction of LiV₂O₅ synthesized via ball milling compared to the theoretical pattern.
Figure 13: Potential vs. specific charge for the via ball milling synthesized LiV₂O₅ electrode.
Figure 14: TEM-bright field picture of Li_{0.3}MoO₃ with carbon coating
Figure 15: Thermogravimetry of the reaction of Li₂C₂ with MoO₃ via ball milling.
Figure 16: Potential vs. specific charge for the via ball milling synthesized Li_{0.3}MoO₃ electrode.
Figure 17: X-Ray Powder Diffraction of LiH₂V₃O₈ synthesized via ball milling.
Figure 18: Potential vs. specific charge for the via ball milling synthesized LiH₂V₃O₈ electrode.

### Modes for Carrying Out the Invention

Analytical and Investigation Methods:

### Electrochemical Measurements:

Galvanostatic measurements were monitored by Astrol, a program from Astrol Electronic AG. A potentiostat (BAT-SMAL, battery cycler) was connected using a serial cable to a personal computer (running Windows XP) via a serial/analog converter. The composition of all electrodes was 73% active material, 15% Super P® Carbon (obtainable from TIMCAL) and 2 % polyvinylidene fluoride (PVDF). The materials were mixed in a THF/Toluene 4 : 1 mixture. Finally the electrodes were dried at 180°C under air. The only exception was the LiFePO₄ electrode that was dried at 80°C under vacuum. The measurements were done with fixed currents of 50A/kg.

The electrolyte was LP30 (obtainable from Merck Chemicals), 1.4 mol/L LiPF₆ in ethylene carbonate/dimethyl carbonate 1/1 by weight. and the counter electrode was a disk of metallic lithium with a diameter of 13 mm and 0.5 mm thickness.

### Differential- and Thermogravimetry:

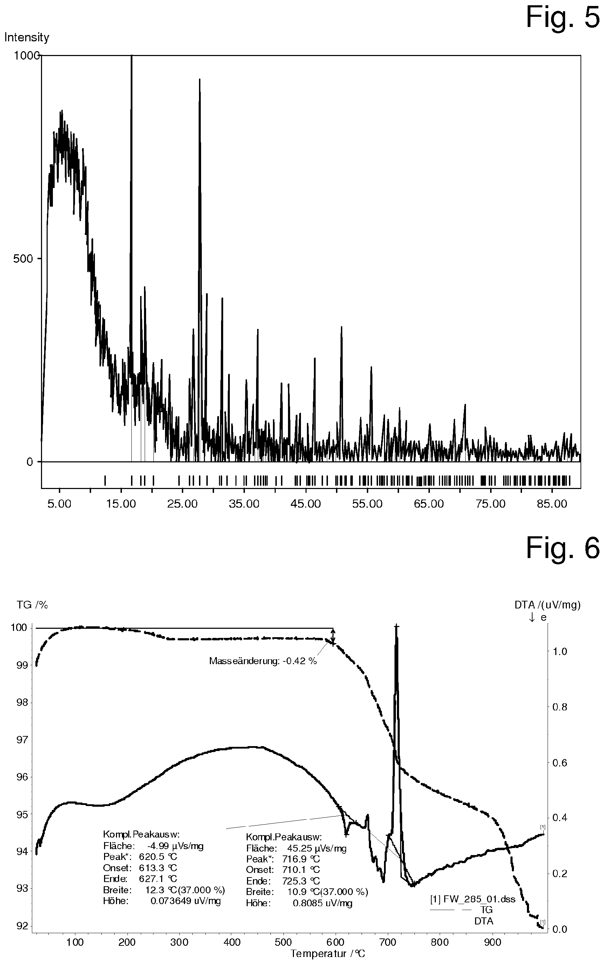

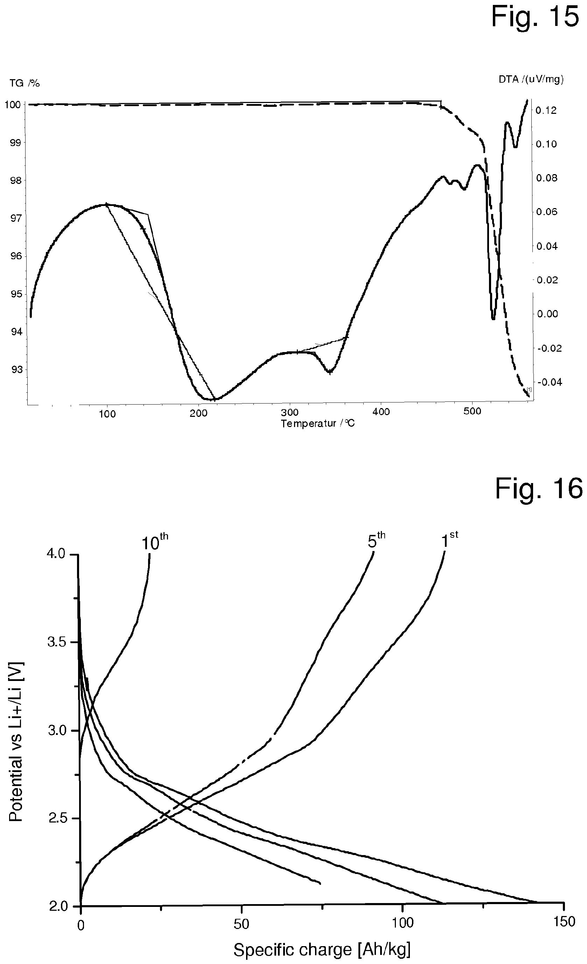

The measurements were performed with a Netzsch STA 409 using corundum crucibles using a heating rate of 10K/min. The reference powder was corundum, too. The measurements show (see Figures 6 and 15) that there is no significant mass loss below the reaction temperature of 600°C for V₂O₅ and 400 °C for MoO₃. Thus the reactions are completely proceeding to the lithiated oxidants_{reduced} and carbon.

### Powder Diffractometry:

The measurements were performed with a STOE STADI P2 diffractometer in transmission mode with germanium monochromator, CUₖₐ₁ = 1.54056 Å

### Electron Microscopy:

Electron microscopy was performed in a Tecnai F30 microscope (manufactured by FEI) with a field emission gun (FEG), V_{acc} = 300kV, and Cₛ = 1.2 mm

### Experimental Part:

### Commercial reactants and electrolytes:

- Lithium granule 99.9 %, Aldrich
- Graphite powder natural microcrystal grade, APS 2-15 micron, 99.9995%, Alfa Aesar
- V₂O₅, 99.2%, Alfa Aesar
- FeCl₃ anhydrous purum, Fluka
- H₃PO₄ ortho-phosphric acid 85%, Merck
- MoO₃ 99.5%, Sigma Aldrich
- LiMn₂O₄, Merck
- PVDF averabe Mw ∼ 534,000 by GPC, Sigma Aldrich
- LP30; 1M LiPF6 in ethylene carbonate : dimethyl carbonate 1 : 1 (w/w), Merck
- LF30; 1M Li(C2F5)3PF3 in ethylene carbonate : dimethyl carbonate 1 : 1 (w/w), Merck, highly stable

### Synthesized Materials [source or description of method]:

### Oxidants:

- FePO4 [C. Delacourt, Solid State Ionics, 173, 113-118, 2004]
- MnO2 [Asulab]
- NbNO [Nesper, R., Wang X.-J., EP 2 378 596 A1]
- Glasses of V2O5 and MoO3 [Sakurei et al. US 4,675,260]

### Metallated Reductants:

- Li₂C₂ [Armbruster, Dissertation (thesis), ETH Zurich No. 17553, 2008]
- LiNaC₂ [R. Nesper, Habilitationsschrift, Stuttgart, 1998]
- LiKC₂ [R. Nesper, Habilitationsschrift, Stuttgart, 1998]
- Li₂NCN [Sokolov, Trudy po Khimii I Khimicheskoi Tekhnologii (2), 18-19, 1973]
- Li₃BN₂ [Yamane, Journal of Solid State Chemistry 71(1), 1-11, 1987]

### Heat treatment:

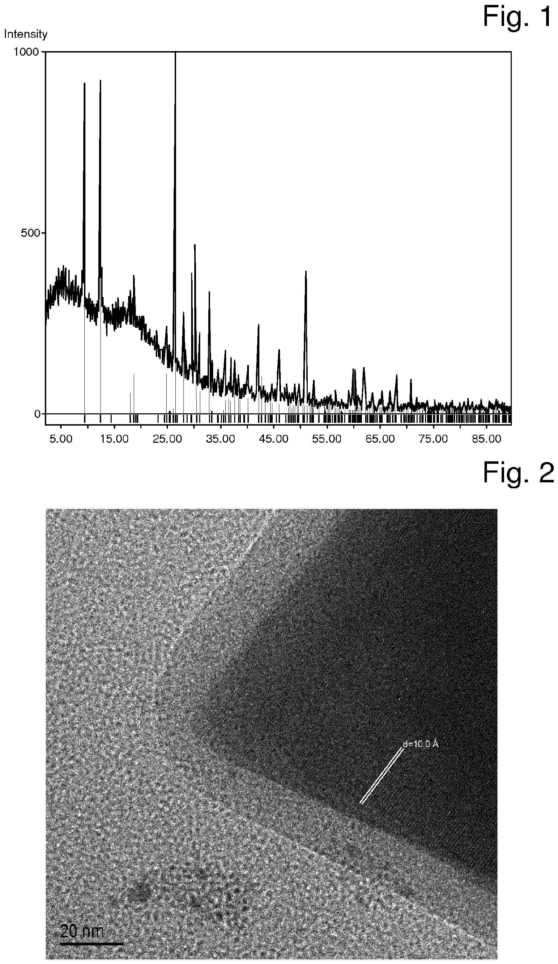

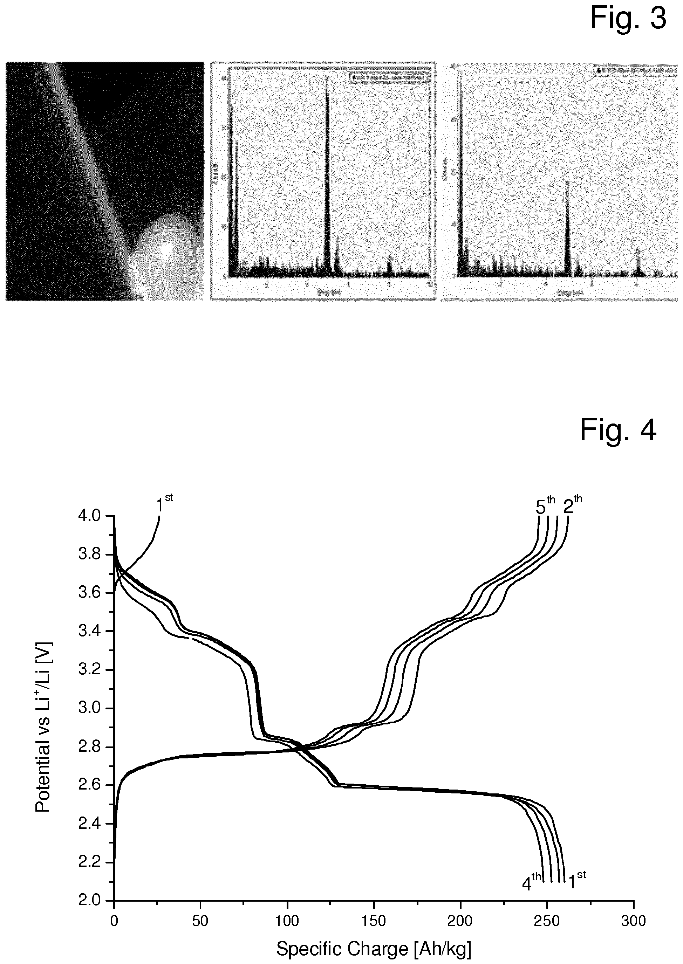

### Example 1, Figures 1 to 4:

1.5 Li₂C₂ + 10 V₂O₅ → 10 Li_{0.3}V₂O₅ + 3 C_{surface}

1.8g (10mmol) V₂O₅ and 0.0569g (1.5mmol) Li₂C₂ were mixed in a mortar. Then the mixture was heated to 600°C using a heating ramp of 180°C/h and kept at 600°C for 0.5 hours.

### Example 2, Figures 5 to 7:

5 Li₂C₂ + 10 V₂O₅ → 10 LiV₂O₅ + 10 C_{surface}

1.8g (10mmol) V₂O₅ and 0.1895g (5mmol) Li₂C₂ were mixed in a mortar. Then the mixture was heated to 600°C using a heating ramp of 180°C/h and kept at 600°C for 0.5 hours.

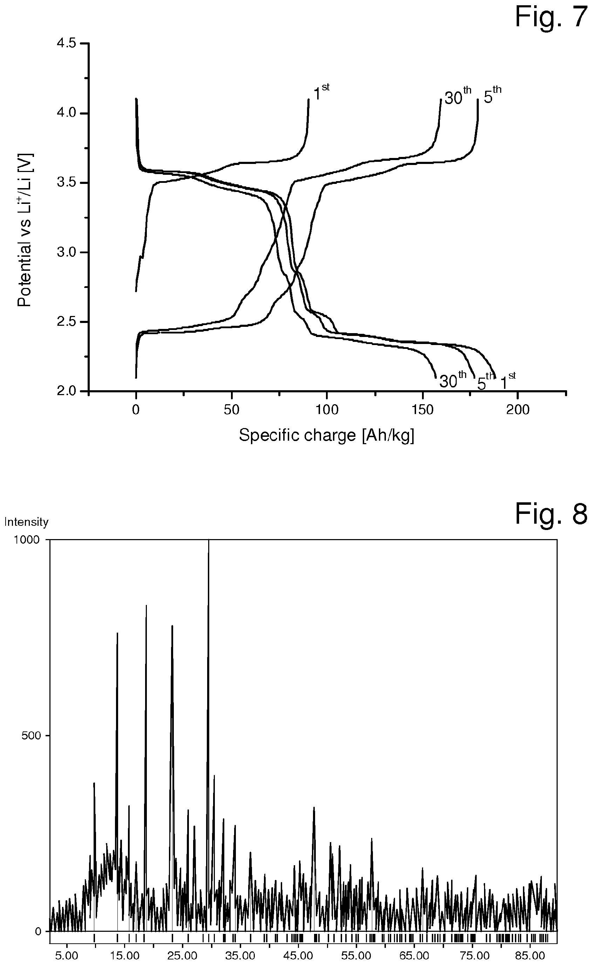

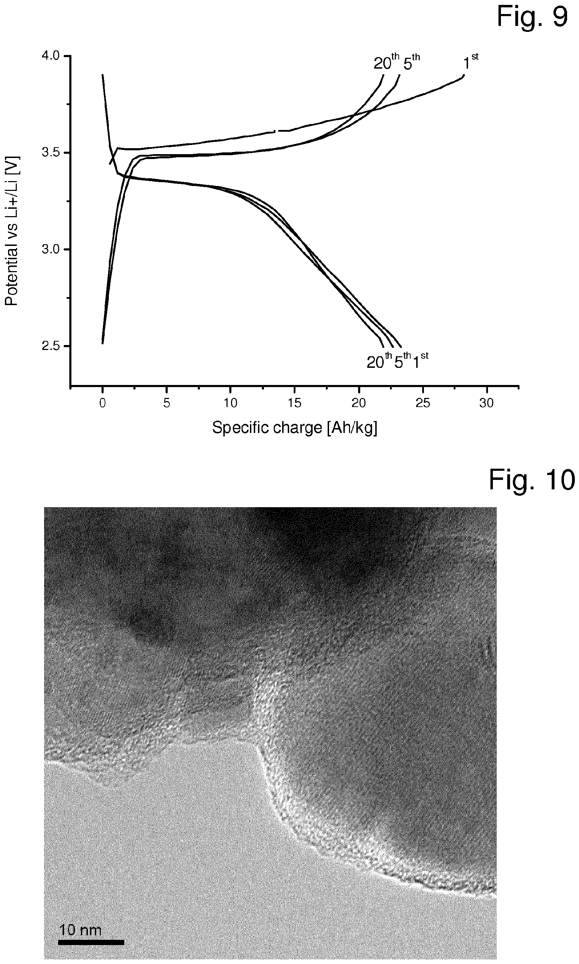

### Example 3, Figures 8 to 11:

3 Li₂C₂ + 6 FePO₄ → 6 LiFePO₄ + 6 C_{surface}

0.905g (6mmol) FePO₄ and 0.114g (3mmol) Li₂C₂ were mixed in a mortar. Then the mixture was heated to 450°C using a heating ramp of 180°C/h and kept at 450°C for 2 hours.

### Ball Milling:

The starting materials indicated below were premixed in a mortar before reacted in a Fritsch Pulverisette 6 with 400 rpm for 0.5 hours and at a ratio between the weight of the balls and the weight of the sample of 1 : 5.

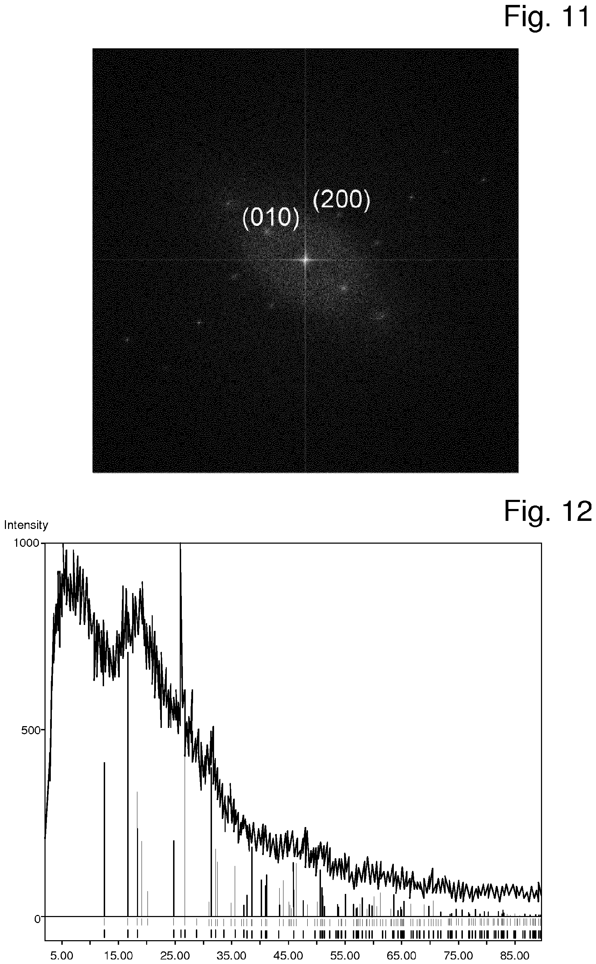

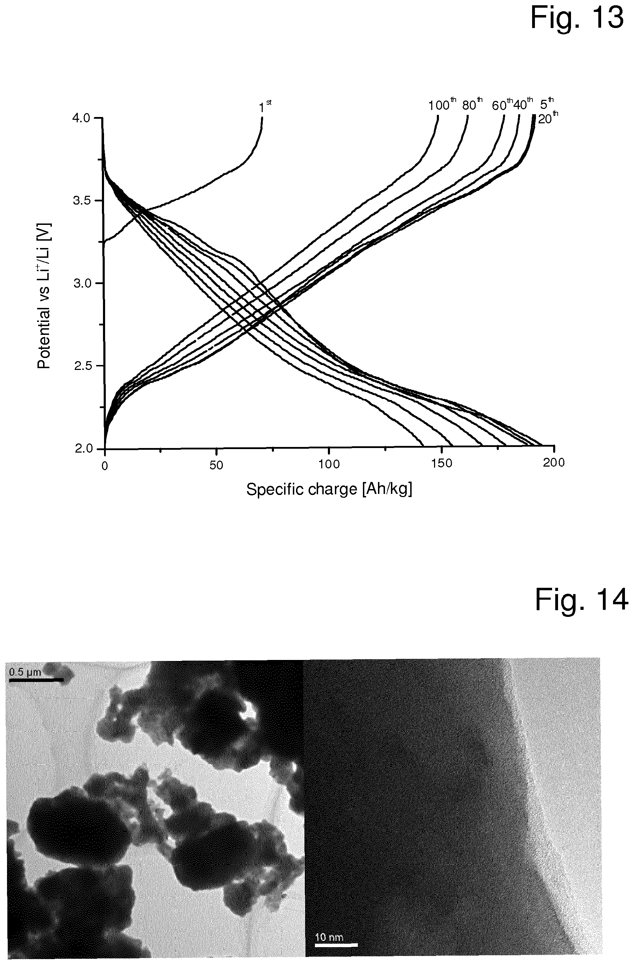

### Example 4, Figures 12 and 13:

5 Li₂C₂ + 10 V₂O₅ → 10 LiV₂O₅ + 10 C_{surface}

1.8g (10mmol) V₂O₅ and 0.1895g (5mmol) Li₂C₂ were premixed in a mortar. Then the mixture was reacted in a Fritsch Pulverisette 6 with 400 rpm for 0.5 hours.

### Example 5, Figures 14 to 16:

1.5 Li₂C₂ + 10 MoO₃ → 10 Li_{0.3}MoO₃ + 3 C_{surface}

1.4394g (10mmol) MoO₃ and 0.0569g (1.5mmol) Li₂C₂ were premixed in a mortar. Then the mixture was reacted in a Fritsch Pulverisette 6 with 400 rpm for 0.5 hours.

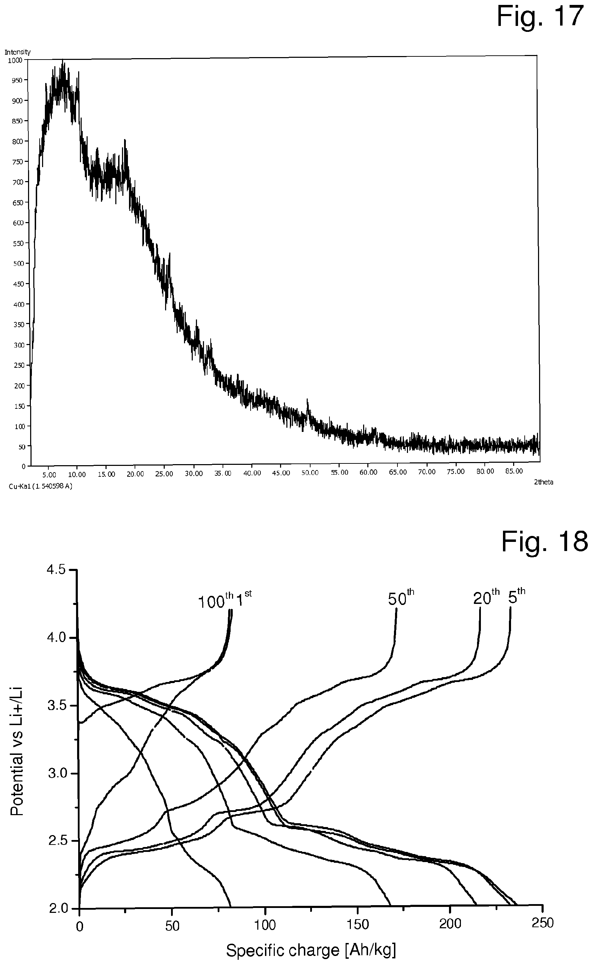

### Example 6, Figures 17 and 181:

5 Li₂C₂ + 10 H₂V₃O₈ → 10 LiH₂V₃O₈ + 10 C_{surface}

2.8284g (10mmol) H₂V₃O₈ and 0.1895g (5mmol) Li₂C₂ were premixed in a mortar. Then the mixture was reacted in a Fritsch Pulverisette 6 with 400 rpm for 0.5 hours.

### Example 7; Electrode preparation

From the coated particulate materials described above electrodes were prepared by mixing 73% coated LiEAM 15% Super P® Carbon (obtainable from TIMCAL) and 2 % polyvinylidene fluoride (PVDF) in a THF/Toluene 4 : 1 mixture and then drying at 180°C under air, except for the LiFePO₄ electrode that was dried at 80°C under vacuum.

Analytical data and electrochemical behaviour is shown in the Figures as indicated to each example.

While there are shown and described presently preferred embodiments of the invention, it is to be distinctly understood that the invention is not limited thereto but may be otherwise variously embodied and practiced within the scope of the following claims.

## Claims

1. A method for producing conductively coated particles comprising an at least partially metallated electroactive core material, wherein said method comprises the steps of premixing an oxidant electroactive material "oxidant" with a metallated reductant "Mₓreductant" followed by chemically reacting the oxidant electroactive material with the metallated reductant, said reductant being a coating precursor, said metal being at least one alkaline and/or at least one alkaline earth metal, and said chemically reacting being performed under conditions allowing reduction and metallation of the electroactive material via insertion or intercalation of the alkaline metal cation or cations and/or the alkaline earth metal cation or cations and coating of the metallated electroactive material with a coating formed from the metallated reductant via a redox reaction of the form:
Mₓreductant + oxidant → Mₓoxidant_{reduced} + reductant_{surface}(reductant_{oxidized}),
said conditions comprising applying energy in the form of
- heat
- tribological energy
- ultrasound
- microwave.

2. The method of claim 1 wherein said conditions comprise applying energy in the form of
- heat
- ball milling as tribological energy.

3. The method of any of the preceding claims wherein the metal of the metallated reductant is an alkaline metal containing or consists of lithium and optionally sodium and/or potassium.

4. The method of any of the preceding claims wherein the reductant of the metallated reductant is oxygen free.

5. The method of any of the preceding claims wherein the coating and/or reductants are selected from
| coating | metallated coatinq precursor/reductant |
|---|---|
| carbon | Li₂C₂ |
| BN | Li₃BN₂ |
| carbon nitride (CNₓ) | Li₂CN₂ |
| CBx | Li₄BCB |
| CBₓN_{y} | lithium pyrazine precursor |
| (S_{y}N)ₓ | LigNS₃ |
| (CH)ₓ (polyacetylene) | LiHC₂ |

6. The method of any of the preceding claims wherein the oxidants are selected from transition metal oxides, hydrated transition metal oxides, transition metal oxynitrides, transition metal phosphates, transition metal oxides glasses, elements, preferably from transition metal oxides selected from MoO₃, MnO₂, LiMn₂O₄, V₂O₅, or hydrated transition metal oxides selected from H₂V₃O₈, or transition metal oxynitrides selected from NbNO, or transition metal phosphates selected from FePO₄ (Co, Mn, Ni), or transition metal oxides glasses selected from Glasses containing V2O5 and MoO₃, or elements selected from S, Se, Si.

7. The method of any of the preceding claims wherein the coating has an average thickness of 0.5 nm to 30 nm, preferably between 0.5 to 2 nm.

8. The method of any of the preceding claims wherein the conditions allowing reduction and lithiation of the electroactive material and coating deposition comprise a tribochemical step performed by ball milling at a rotation speed of 200-1500rpm during 15 to 45 minutes such as 30 minutes, preferably with 400 rpm during 30 minutes and/or at a ratio between the weight of the balls and the weight of the sample in the range from 6 : 1 to 4 : 1, preferably around 5 : 1 like 5.2 : 1 to 4.8 : 1.

9. The method of any of claims 1 to 7 wherein the conditions allowing reduction and lithiation of the electroactive material and coating deposition comprise a heat treatment with a heating profile providing slow heating rate of between 50 to 70 K for about at least the last hour, i.e. starting at least at 50 to 70 K below the reaction temperature, preferably a heating rate of about 60 K/h starting at about 60 K before reaching the reaction temperature.

10. The method of claim 9, wherein the heating profile comprises a fast heating rate of 180 K/h, preferably a fast heating rate of 180 K/h until about 60 K below reaction temperature followed by a slow heating rate of about 60K/h.

## Patentansprüche

1. Verfahren zum Erzeugen von leitfähig beschichteten Partikeln umfassend ein mindestens teilweise metalliertes elektroaktives Kernmaterial, wobei das Verfahren die Schritte zum Vormischen eines elektroaktiven Oxidationsmaterials, "Oxidationsmittel", mit einem metallierten Reduktionsmittel, "MxReduktionsmittel", umfasst, gefolgt von einer chemischen Reaktion des elektroaktiven Oxidationsmaterials mit dem metallierten Reduktionsmittel, wobei das Reduktionsmittel eine Beschichtungsvorstufe ist, das Metall mindestens ein Alkalimetall und/oder mindestens ein Erdalkalimetall ist, und die chemische Reaktion unter Bedingungen durchgeführt wird, die eine Reduktion und Metallierung des elektroaktiven Materials durch Einfügen oder Interkalation des Alkalimetallkations oder der Alkalimetallkationen und/oder des Erdalkalimetallkations oder der Erdalkalimetallkationen und eine Beschichtung des metallierten elektroaktiven Materials mit einer Beschichtung ermöglichen, die aus dem metallierten Reduktionsmittel über eine Redoxreaktion in der Form gebildet wird:
MxReduktionsmittel + Oxidationsmittel → MₓOxidationsmittel_{reduziert} + Reduktionsmittel_{Oberfläche}(Reduktionsmittel_{oxidiert}),
wobei die Bedingungen das Anwenden von Energie in der Form von
- Wärme
- tribologischer Energie
- Ultraschall
- Mikrowellen
umfassen.

2. Verfahren nach Anspruch 1, wobei die Bedingungen das Anwenden von Energie in der Form von
- Wärme
- Kugelmahlen als tribologische Energie umfassen.

3. Verfahren nach einem der vorangehenden Ansprüche, wobei das Metall des metallierten Reduktionsmittels ein Alkalimetall ist, das Lithium und optional Natrium und/oder Kalium enthält oder daraus besteht.

4. Verfahren nach einem der vorangehenden Ansprüche, wobei das Reduktionsmittel des metallierten Reduktionsmittels sauerstofffrei ist.

5. Verfahren nach einem der vorangehenden Ansprüche, wobei die Beschichtung und/oder die Reduktionsmittel ausgewählt werden aus
| Beschichtung | metallierte Beschichtung-Vorstufe/Reduktionsmittel |
|---|---|
| Kohlenstoff | Li₂C₂ |
| BN | Li₃BN₂ |
| Kohlenstoffnitrid (CNx) | Li₂CN₂ |
| CBx | Li₄BCB |
| CBxN_{y} | Lithiumpyrazin-Vorstufe |
| (S_{y}N)ₓ | Li₉NS₃ |
| (CH)ₓ(Polyacetylen) | LiHC₂ |

6. Verfahren nach einem der vorangehenden Ansprüche, wobei die Oxidationsmittel ausgewählt werden aus Übergangsmetalloxiden, hydratisierten Übergangsmetalloxiden, Übergangsmetalloxinitriden, Übergangsmetallphosphaten, Übergangsmetalloxid-Gläsern, Elementen, vorzugsweise von Übergangsmetalloxiden, ausgewählt aus MoO₃, MnO₂, LiMn₂O₄, V₂O₅, oder hydratisierten Übergangsmetalloxiden, ausgewählt aus H₂V₃O₈, oder Übergangsmetalloxinitriden, ausgewählt aus NbNO, oder Übergangsmetallphosphaten, ausgewählt aus FePO4 (Co, Mn, Ni), oder Übergangsmetalloxid-Gläsern ausgewählt aus Gläsern, die V₂O₅ und MoO₃ enthalten, oder von aus S, Se, Si ausgewählten Elementen.

7. Verfahren nach einem der vorangehenden Ansprüche, wobei die Beschichtung eine durchschnittliche Dicke von 0,5 nm bis 30 nm, vorzugsweise zwischen 0,5 bis 2 nm aufweist.

8. Verfahren nach einem der vorangehenden Ansprüche, wobei die Bedingungen, die Reduktion und Lithiierung des elektroaktiven Materials und eine Beschichtungsaufbringung ermöglichen, einen tribochemischen Schritt umfassen, der durch Kugelmahlen mit einer Drehgeschwindigkeit von 200-1500 UPM während 15 bis 45 Minuten, wie beispielsweise 30 Minuten, vorzugsweise mit 400 UPM während 30 Minuten und/oder bei einem Verhältnis zwischen dem Gewicht der Kugeln und dem Gewicht der Probe im Bereich von 6 : 1 bis 4 ; 1, vorzugsweise etwa 5 : 1, wie etwa 5,2 : 1 bis 4,8 : 1, durchgeführt wird.

9. Verfahren nach einem der Ansprüche 1 bis 7, wobei die Bedingungen, die eine Reduktion und Lithiierung des elektroaktiven Materials und eine Beschichtungsaufbringung ermöglichen, eine Wärmebehandlung mit einem Heizprofil, das eine langsame Heizrate von zwischen 50 bis 70 K für etwa mindestens der letzten Stunde, d.h. beginnend mindestens bei 50 bis 70 K unterhalb der Reaktionstemperatur, vorzugsweise eine Heizrate von etwa 60 K/h beginnend bei etwa 60 K vor Erreichen der Reaktionstemperatur umfassen.

10. Verfahren nach 9, wobei das Heizprofil eine schnelle Heizrate von 180 K/h, vorzugsweise eine schnelle Heizrate von 180 K/h bis etwa 60 K unterhalb der Reaktionstemperatur gefolgt von einer langsamen Heizrate von etwa 60K/h umfasst.

## Revendications

1. Procédé de production de particules à revêtement conducteur comprenant un matériau de noyau électroactif au moins partiellement métallé, dans lequel ledit procédé comprend les étapes de prémélange d'un matériau électroactif oxydant « oxydant » avec un réducteur métallé « Mₓréducteur » suivi par la réaction chimique du matériau électroactif oxydant avec le réducteur métallé, ledit réducteur étant un précurseur de revêtement, ledit métal étant au moins un métal alcalin et/ou au moins un métal alcalino-terreux, et ladite réaction chimique étant réalisée sous des conditions permettant la réduction et la métallation du matériau électroactif via insertion ou intercalation du cation ou des cations de métal alcalin et/ou du cation ou des cations de métal alcalino-terreux et le revêtement du matériau électroactif métallé avec un revêtement formé à partir du réducteur métallé via une réaction d'oxydoréduction de la forme :
Mxréducteur + oxydant → Mxoxydantréduit + réducteur_{surface} (réducteur_{oxydé}),
lesdites conditions comprenant l'application d'énergie sous la forme
- de chaleur
- d'énergie tribologique
- d'ultrasons
- de micro-ondes.

2. Procédé selon la revendication 1 dans lequel lesdites conditions comprennent l'application d'énergie sous la forme
- de chaleur
- de broyage à billes en tant qu'énergie tribologique.

3. Procédé selon l'une quelconque des revendications précédentes dans lequel le métal du réducteur métallé est un métal alcalin contenant du, ou constitué de, lithium et facultativement sodium et/ou potassium.

4. Procédé selon l'une quelconque des revendications précédentes dans lequel le réducteur du réducteur métallé est exempt d'oxygène.

5. Procédé selon l'une quelconque des revendications précédentes dans lequel le revêtement et/ou les réducteurs sont sélectionnés parmi
| revêtement | précurseur de revêtement métallé/réducteur |
|---|---|
| carbone | Li2C2 |
| BN | Li₃BN₂ |
| nitrure de carbone (CNₓ) | Li₂CN₂ |
| CBx | Li₄BCB |
| CBₓN_{y} | précurseur de lithium pyrazine |
| (S_{y}N)ₓ | Li₉NS₃ |
| (CH)ₓ(polyacétylène) | LiHC₂ |

6. Procédé selon l'une quelconque des revendications précédentes dans lequel les oxydants sont sélectionnés parmi des oxydes de métaux de transition, des oxydes de métaux de transition hydratés, des oxynitrures de métaux de transition, des phosphates de métaux de transition, des verres d'oxydes de métaux de transition, des éléments, de préférence parmi des oxydes de métaux de transition sélectionnés parmi MoO₃, MnO₂, LiMn₂O₄, V₂O₅, ou des oxydes de métaux de transition hydratés sélectionnés parmi H₂V₃O₈, ou des oxynitrures de métaux de transition sélectionnés parmi NbNO, ou des phosphates de métaux de transition sélectionnés parmi FePO₄ (Co, Mn, Ni), ou des verres d'oxydes de métaux de transition sélectionnés parmi des verres contenant V₂O₅ et MoO₃, ou des éléments sélectionnés parmi S, Se, Si.

7. Procédé selon l'une quelconque des revendications précédentes dans lequel le revêtement possède une épaisseur moyenne de 0,5 nm à 30 nm, de préférence entre 0,5 et 2 nm.

8. Procédé selon l'une quelconque des revendications précédentes dans lequel les conditions permettant la réduction et la lithiation du matériau électroactif et le dépôt de revêtement comprennent une étape tribochimique réalisée par broyage à billes à une vitesse de rotation de 200 à 1 500 tr/min pendant 15 à 45 minutes, tel que 30 minutes, de préférence à 400 tr/min pendant 30 minutes et/ou à un rapport entre le poids des billes et le poids de l'échantillon dans la plage de 6 : 1 à 4 : 1, de préférence autour de 5 : 1 comme de 5,2 : 1 à 4,8 : 1.

9. Procédé selon l'une quelconque des revendications 1 à 7 dans lequel les conditions permettant la réduction et la lithiation du matériau électroactif et le dépôt de revêtement comprennent un traitement thermique avec un profil de chauffage fournissant une vitesse de chauffage lente d'entre 50 et 70 K pendant environ au moins la dernière heure, c'est-à-dire commençant au moins à 50 à 70 K au-dessous de la température de réaction, de préférence une vitesse de chauffage d'environ 60 K/h commençant à environ 60 K avant d'atteindre la température de réaction.

10. Procédé selon la revendication 9, dans lequel le profil de chauffage comprend une vitesse de chauffage rapide de 180 K/h, de préférence une vitesse de chauffage rapide de 180 K/h jusqu'à environ 60 K au-dessous de la température de réaction suivie d'une vitesse de chauffage lente d'environ 60 K/h.
